Europäisches Patentamt

European Patent Office

Office européen des brevets

(11) Publication number: **0 154 947**
**B1**

## (12) EUROPEAN PATENT SPECIFICATION

(45) Date of publication of patent specification: **17.05.89**

(21) Application number: **85102626.0**

(22) Date of filing: **08.03.85**

(51) Int. Cl.⁴: **F 17 C 3/08, G 01 J 5/02**

(54) Dewar apparatus.

(30) Priority: **12.03.84 US 588629**

(43) Date of publication of application:
**18.09.85 Bulletin 85/38**

(45) Publication of the grant of the patent:
**17.05.89 Bulletin 89/20**

(84) Designated Contracting States:
**DE FR GB**

(56) References cited:
**EP-A-0 115 698**
**US-A-3 851 173**
**US-A-4 206 354**

(73) Proprietor: **HONEYWELL INC.**
**Honeywell Plaza**
**Minneapolis Minnesota 55408 (US)**

(72) Inventor: **Gordon, William R.**
**15 Spruce Hill Road**
**Burlington Massachusetts 01803 (US)**
Inventor: **Bower, Chris M.**
**8 Shelburne Road**
**Nashua New Hampshire 03063 (US)**

(74) Representative: **Herzbach, Dieter et al**
**Honeywell Europe S.A. Holding KG Patent- und**
**Lizenzabteilung Kaiserleistrasse 55 Postfach 184**
**D-6050 Offenbach am Main (DE)**

Courier Press, Leamington Spa, England.

## Description

The present invention relates to a Dewar apparatus according to the preamble of claim 1 which in particular finds use in thermal imaging systems.

Such a Dewar apparatus may be taken from US—A—3 851 173 or from an article entitled "Automatic Testing of Infrared Detector Arrays", D. A. Jones, SPIE, Vol. 344, Infrared Sensor Technology (1982). There the base of a coldwell supports a flange to which a cap typically made of "Kovar" (a trademark of Westinghouse Electric Corporation) is attached. The flange itself is comprised of a monolithic ceramic disc. The upper surface of such ceramic disc includes a radial pattern of conductive paths. The lead wires of a detector device are connected to these paths on the ceramic disc by delineated paths which run the length of the coldwell up to the jumper wires connected near the other end of the delineated coldwell. The opposite end of the conductive paths on the ceramic disc connected to a pin assembly covering substantially all of the disc outside the vacuum chamber. A tape cable connects these pins to a bias resistor board or pack and/or an external connector located on the protective dewar housing. A dielectric ring covers the conductive paths on the inner portion of the ceramic disc providing an electrically insulated, vacuum tight surface. A metalized ring is deposited over the dielectric ring for brazing purposes. Similarly, another metalization is deposited on the other side of the ceramic disc providing a vacuum tight surface on which the lower support piece is mounted. The upper vacuum cap and lower base are attached to the ceramic by brazing to the metalized rings on either side of the monolithic ceramic.

The fusing of the upper cap and lower flange assembly to the dielectric surfaces of the monolithic ceramic forms a relatively weak joint which is easily damaged during handling. Also, the use of conductive paths on the surface of the ceramic disc tends to create, in combination with the dielectric fusing process, a joint which may develop vacuum leaks. Further, the dispersed pin configuration makes in-process electrical testing difficult because the inner-most pins are not readily accessible.

From US—A—4 206 354 a metal flange bonded to the glass coldwell serves primarily as a supporting member for the vacuum chamber cap and window. The base portion of the glass coldwell is thickened so that it may include buried conductive wires which surface above and below the flange thereby providing an electrical exit from the vacuum chamber. Gold jumper wires connect the detector array at the endwell to the delineated leads on either the coldwell or endwell. Gold wires are also used at the base of the coldwell to connect the coldwell delineated leads to the conductive wires which exit from the vacuum chamber. These are, in turn, connected to a tape cable or other standard electrical interconnect assembly.

The fabrication of buried leads within the coldwell requires processing steps of molding, firing, grinding and honing the glass coldwell which must be accomplished with great precision, and are, therefore, very expensive. Furthermore, this process does not lend itself well to in-process testing. This results in further waste. Finally, the gold jumper wire connections used above the flange are susceptible to breakage. Also, because the design uses many parts and requires the use of more complex assembly techniques, the cost per unit is higher.

From earlier filed EP—A—0 115 698 (published on August 15, 1984) it is known to provide a feed through element which comprises three layers of insulation through which the electrical connections pass crookedly, which assures vacuum integrity of the assembly.

Accordingly, it is a primary object of the present invention to provide an improved detector dewar apparatus with respect to vacuum density and simplicity of design and assembly.

This object of the present invention is achieved according to the characterizing features of claim 1.

Further advantageous embodiments of the inventive dewar apparatus may be taken from the dependent claims. The dewar apparatus according to the invention has fewer parts, and uses a single ceramic ring to provide several functions, including a basal vacuum proof member of the dewar vessel chamber, a matrix for embedded vacuum proof electrical conductors, a mounting surface for the cap members and dewar base, and also an arrangement of components which facilitates in-process testing.

The above and other objects of the present invention are achieved in the illustrative embodiment as described with respect to the Figures in which:

Figure 1 shows a cross-section through the dewar apparatus of the present invention.

Figure 2 shows a detailed cross-sectional view through the ceramic matrix feedthrough and cap support member of the dewar apparatus of the present invention; and

Figure 3 shows a detailed cross-sectional view through a portion of the present invention as shown in Figure 2, of an alternative embodiment of the present invention.

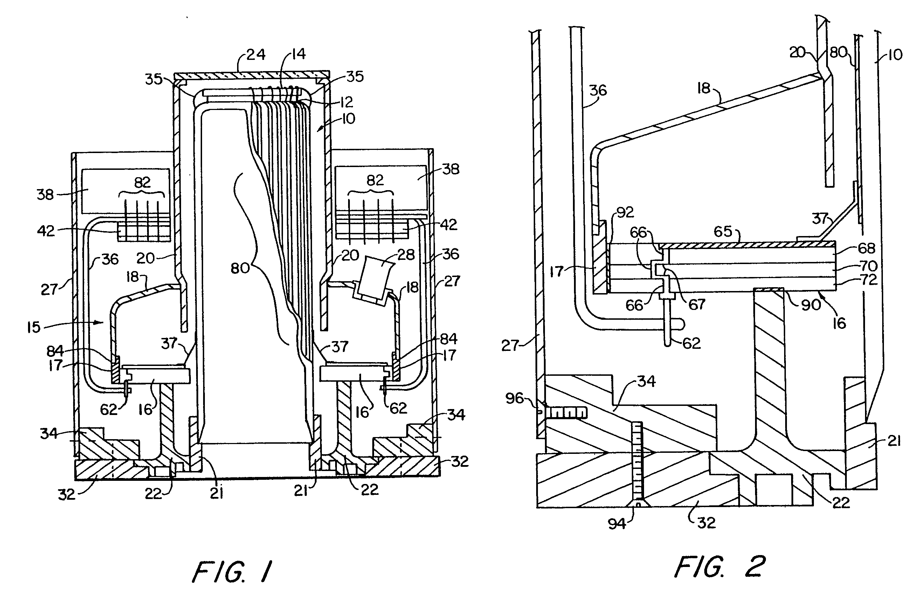

Referring to Figures 1 and 2, the dewar apparatus of the present invention includes a coldwell 10 with endwell 12 which supports detector assembly 14, a vacuum vessel 15 having inner base 21 and outer base 22, ceramic matrix electrical feedthrough 16, lower cap 18 and upper cap 20 with transmissive window 24, and protective shield 27. Jumper wires 35 provide electrical connection between detector assembly 14 and the delineated matrix 80 on coldwell 10 or endwell 12. Jumper wires 37 connect the delineated leads of the axial matrix 80 on the basal portion of coldwell 10 to the feedthrough matrix 16 through conductive tracks 65, vias 66, conductive tracks 67, pins 62, tape cable 36, and ultimately to a standard external device connector 38 via pins 82. Connectors 38 may also be attached to bias resistor boards 42 sharing pins 82 in common in order to provide a tailored electrical resistance in each detector element's circuit, together with circuit grounds, as required.

Inner base 21 and outer base 22 and other vacuum chamber members 17, 18 and 20 may be made of any material which is mechanically rigid, has appropriate thermal properties, can hold a vacuum, and does not outgas impurities at an unaccepable rate once evacuated. Window 24 must have the same characteristics except that it must be optically transmissive in the desired bandwidth. Typically, these members will be made of stainless steel, Kovar, or some other metal which may be easily assembled by, for example, soldering, welding or brazing techniques. Mounting plate 32 and protective shield support ring 34 will be made of stainless steel or aluminum, or some other metal which may be easily assembled by standard mechanical hardware. Similarly, shield 27 may be made of any mechanically durable and formable material, such as plastic or stainless steel. Protective shield 27, support ring 34, and mounting plate 32 may be attached by any suitable mechanical fasteners, such as screws 94 and 96 shown in Figure 2.

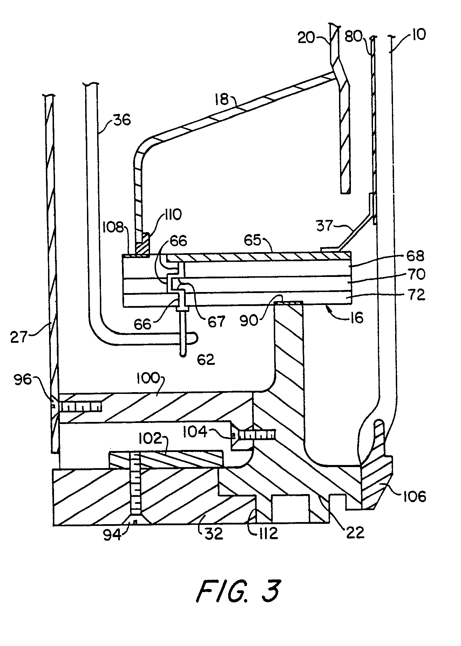

Figure 3 shows an alternative embodiment of the basal portion of the apparatus of the present invention which allows for rotation of dewar vessel 15 with respect to stationary mounting plate 32. Ring 100 is fastened to outer base 22 via mechanical fastener 104. Protective shield 27 is, in turn, fastened to ring 100 via mechanical fastener 96. Plate 102 is a split ring clamp which, when fastener 94 is not tight, allows rotation of outer base 22 and dewar vessel 15 with respect to mounting plate 34 about joint 112 in order to properly align detector assembly 14. When fastener 94 is tightened, the positions of base 22 and mounting plate 34 are fixed.

Coldwell 10 may be made of any material which is easily assembled to base 21, and which has low thermal conductivity, and high mechanical strength. Coldwell 10 may be made of glass which may be chamfered at the opening opposite the endwell 12, as shown in Figures 1 and 2, and sealed to inner base 21 by well-known fusing processes. As shown in Figure 3, coldwell 10 need not be chamfered, but rather may be directly fused to inner base 106. Alternatively, coldwell 10 may be made of metal, such as a cobalt/nickel/iron alloy which is brazed to inner base 21. In the latter case, the wall thickness of coldwell 10 may also be reduced to minimize thermal conductivity. Delineated matrix 80 on coldwell 10 may be made of either aluminum or gold using well-known plating techniques. However, if a metal coldwell is used, a dielectric must be placed between coldwell 10 and delineated matrix 80. Alternatively, an internal tape cable may be used in place of matrix 80. Whether on a glass or metal coldwell, this plated surface also provides a thermally reflective surface which further lowers the overall radiative heat load of the dewar.

Ceramic feedthrough assembly 16 is made of a ceramic or other insulating material capable of holding a hard vacuum. Feedthrough matrix 16 comprises multiple layers 68, 70 and 72 of material which have been attached, as shown in Figure 2. Electrical connection is made through matrix 16 from pin 62 to conductive track 65 by a combination of vias 66 and interleaved conductor tracks 67 made through and across the surfaces of layers 68, 70 and 72, as shown. It is noted that only one representative pin 62 of the several connector pin connections to tape cable 36 is shown. In addition, matrix 16 may include many more layers as required by the manufacturing process and pin layout.

Matrix 16 is brazed to outer base 22 and cap support ring 17 at metalizations 90 and 92, respectively, as shown in Figures 1 and 2, or to metalizations 90 and 108 as shown in Figure 3. If a ceramic material is used for matrix 16, metalizations 90, 92 and 108 may be cofired during the manufacture of matrix 16, in order to provide a surface on the ceramic which may be brazed. This technique provides a significantly stronger bond than that attainable by prior techniques of brazing over a dielectric deposition. The embodiment shown in Figure 3 provides several additional advantages. First, placement of metalization 108 and mounting ring 110 on the top of layer 68 of ceramic matrix 16 reduces the stress on ceramic matrix 16 which may be caused by the differential expansion and contraction of mounting ring 110 and ceramic matrix 16 during the manufacturing process. Second, by placing ring 110 on the upper surface of layer 68, the tolerances on ring 110 are more relaxed than those on ring 17, which must fit around the outer diameter of ceramic matrix 16. Finally, the embodiment shown in Figure 3 is more easily manufactured, first, since gravity, rather than surface tension, holds the brazing material in place during manufacture.

It should be noted that pinch-off tube 28 may be positioned elsewhere on vessel 15, if required by packaging or other design constraints.

The above described configuration provides several advantages. First, the cofired metalizations 90, 92 and 108 provide brazing surfaces which are more resistant to handling or end use breakage than the monolithic ceramic flange with dielectric ring previously used. Second, the design of the dewar apparatus of the present invention has substantially fewer parts, and requires simpler and less costly assembly techniques. Third, the use of and location of pin connectors 62 at matrix 16 provide the ability to test the detector assembly 14 before total assembly has been completed. Fourth, by incorporating the ceramic matrix 16 as one part of the vacuum chamber wall, the overall part count of the dewar is decreased. Finally, by incorporating pin connectors 62 on the exterior of matrix 16, the detector assembly 14 may be tested before final assembly with tape cable 36, bias resistor board 42 and external connector 38.

## Claims

1. Dewar apparatus for housing a radiation detector assembly (14) in a vacuum, which apparatus provides a means for electrical connection between elements of said detector assembly and other signal processing subassemblies external to said apparatus, comprising:

A) an inner container (10) having an end surface (12) at a first end of said inner container;

B) an outer container (15) having a lower base member (21, 22), a flange member (16) and cap members (18, 20), said lower base member and said cap members coupled to said flange member such that each of said members forms a portion of an interior wall and an exterior wall of said outer container;

C) means (21, 106) for mounting said inner container (10) in said outer container (15), said means for mounting positioned substantially at the base of said lower base member;

D) conductor means (62, 65, 66, 67) providing a plurality of electrical connections from the inside of said outer container (10) to the outside of said outer container (15) while providing a seal to prevent any significant change in the vacuum which may be contained within said inner and outer containers; and

E) first electrical connection means (37, 80) for coupling said detector assembly (14) to said conductor means (62, 66, 67), said first electrical connection means located in the space between said inner container (10) and said outer container (15), characterized in that said conductor means forms an integral part of said flange member (16) and includes:

F) at least two insulating layers (68, 70, 72) including an outer layer and an inner layer;

G) a plurality of outer terminals (62) mounted on said outer layer (72) of said insulating layers;

H) a plurality of inner terminals (65) mounted on said inner layer (68) of said insulating layers;

I) second electrical connection means (66) coupled between each of said outer terminals and said inner terminals, respectively, in a physical path which runs from said inner terminals through said inner layer, along the junction of said inner layer and said outer layer through said outer layer, and then to said outer terminals, and

J) said plurality of inner terminals comprising conductive tracks (65) applied on said internal wall of said inner layer (68), said tracks connected at one end to said first electrical connection means (37) and at the other end to said second electrical connection means (66).

2. Apparatus according to claim 1, characterized in that said conductor means (66, 67) forms an electrical path which inhibits vacuum degradation of said apparatus.

3. Apparatus according to claim 2, characterized in that said electrical path is physically made with at least one change in physical direction.

4. Apparatus according to claim 1, characterized in that said conductor means includes at least three insulating layers (68, 70, 72) including an inner layer (68), an outer layer (72) and an intermediate layer (70) between the inner and outer layers.

5. Apparatus according to claim 4, characterized in that said inner layer (68) forms a portion of the interior wall of said outer container (15) and wherein said outer layer (72) forms a portion of the exterior wall of said outer container (15).

6. Apparatus according to claim 1, characterized in that said flange member (16) comprises a multi-layer ceramic matrix having a portion of said member for providing a plurality of electrical connections embedded therein.

7. Apparatus according to claim 1, characterized in that said flange member further includes:

A) first means (90) for bonding coupled with said flange member (16), said first means for bonding positioned on said exterior wall (72) of said outer container (15) to provide a mounting surface for said lower base (22);

B) wherein the end of said flange member (16) furthest from said inner container (10) forms an outer cylindrical surface; and

C) second means (92) for bonding coupled with said flange member (16), said second means for bonding positioned on said outer cylindrical surface of said flange member in order to provide a mounting surface for one of said cap members.

8. Apparatus according to claim 1, characterized in that said flange member further includes:

A) first means (90) for bonding coupled with said flange member (16), said first means for bonding positioned on said exterior wall (72) of said outer container (15) to provide a mounting surface for said lower base (22); and

B) second means (108) for bonding coupled with said flange member (16), said second means for bonding positioned on the top of the flange member (16) in order to provide a mounting surface for one of said cap members.

9. Apparatus according to claims 7 and 8, characterized in that said first means (90) for bonding is located on said ceramic material at a position close to said inner container.

10. Apparatus according to claims 7 and 8, characterized in that said first and second means for bonding comprise first and second metalizations (90, 92, 108), respectively, each of said metalizations integrated with said ceramic matrix.

11. Apparatus according to claims 6 and 10, characterized in that said metalizations are integrated with said ceramic matrix by a process of cofired manufacture of said ceramic matrix and said metalizations.

## Patentansprüche

1. Dewargefäß zur Aufnahme einer Strahlungsdetektoranordnung (14) in einem Vakuum, wobei das Gefäß eine Einrichtung zur elektrischen Verbindung zwischen Elementen dieser Detektoranordnung und anderen Signalverarbeitungseinrichtungen außerhalb des Gefäßes vorgibt, umfassend:

A) einen Innenbehälter (10) mit einer Endfläche (12) am ersten Ende des Innenbehälters;

B) einen Außenbehälter (15) mit einer unteren Basis (21, 22), einem Flansch (16) und Haubenelementen (18, 20), wobei die untere Basis und die Haubenelemente mit dem Flansch so verbunden sind, daß jedes der Elemente einen Teil einer Innenwand und einer Außenwand des Außenbehälters bildet;

C) Einrichtungen (21, 106) zur Lagerung des Innenbehälters (10) in dem Außenbehälter (15), wobei diese Lagereinrichtungen im wesentlichen am Boden der unteren Basis angeordnet sind;

D) Leitungseinrichtungen (62, 65, 66, 67) zur Vorgabe mehrerer elektrischer Verbindungen von der Innenseite des Außenbehälters (15) zu der Außenseite des Außenbehälters (15) unter gleichzeitiger Vorgabe einer Abdichtung, um irgendeine signifikante Änderung des Vakuums in dem Innen- und Außenbehälter zu verhindern; und

E) erste elektrische Verbindungsmittel (37, 80) für den Anschluß der detektoranordnung (14) an die Leitungseinrichtungen (62, 66, 67), wobei die ersten elektrischen Verbindungsmittel im Raum zwischen dem Innenbehälter (10) und dem Außenbehälter (15) angeordnet sind, dadurch gekennzeichnet, daß die Leitungseinrichtungen einen integralen Teil des Flansches (16) bilden und umfassen:

F) mindestens zwei Isolierschichten (68, 70, 72) mit einer Außen- und einer Innenschicht;

G) mehrere Außenanschlüsse (62), die auf der Außenschicht (72) der Isolierschichten angeordnet sind;

H) mehrere Innenanschlüsse (65), die auf der Innenschicht (68) der Isolierschichten angeordnet sind;

I) zweite elektrische Verbindungsmittel (66), die zwischen den Außen- und Innenanschlüssen auf einer physikalischen Wegstrecke angeordnet sind, die von den Innenanschlüssen durch die Innenschicht entlang der Verbindung von Innen- und Außenschicht durch die Außenschicht und sodann zu den Außenanschlüssen verläuft; und

J) wobei die mehreren Innenanschlüsse Leitungspfade (65) auf der Innenwand der Innenschicht (68) umfassen, die mit einem Ende mit den ersten elektrischen Verbindungsmitteln (37) und mit dem anderen Ende mit den zweiten elektrischen Verbindungsmitteln (66) verbunden sind.

2. Gefäß nach Anspruch 1, dadurch gekennzeichnet, daß die Leitungseinrichtungen (66, 67) eine elektrische Wegstrecke vorgeben, die eine Vakuumbeeinträchtigung des Gefäßes verhindert.

3. Gefäß nach Anspruch 2, dadurch gekennzeichnet, daß die elektrische Wegstrecke wenigstens eine physikalische Richtungsänderung aufweist.

4. Gefäß nach Anspruch 1, dadurch gekennzeichnet, daß die Leitungseinrichtungen wenigstens drei Isolierschichten (68, 70, 72) aufweisen, die eine Innenschicht (68), eine Außenschicht (72) und eine Zwischenschicht (70) zwischen der Innen- und Außenschicht umfassen.

5. Gefäß nach Anspruch 4, dadurch gekennzeichnet, daß die Innenschicht (68) einen Teil der Innenwand des Außenbehälters (15) bildet und die Außenschicht (72) einen Teil der Außenwand des Außenbehälters (15) bildet.

6. Gefäß nach Anspruch 1, dadurch gekennzeichnet, daß der Flansch (16) eine mehrschichtige Keramikmatrix umfaßt, die mit einem Teil mehrere eingebettete elektrische Verbindungen vorgibt.

7. Gefäß nach Anspruch 1, dadurch gekennzeichnet, daß der Flansch ferner umfaßt:

A) erste mit dem Flansch (16) verbundene Verbindungsmittel (90) auf der Außenwand (72) des Außenbehälters (15), um eine Montagefläche für die untere Basis (22) vorzugeben;

B) wobei das am weitesten von dem Innenbehälter (10) entfernte Ende des Flansches (16) eine zylindrische Außenfläche bildet; und

C) zweite mit dem Flansch (16) verbundene Verbindungsmittel (92) auf der zylindrischen Außenfläche, um eine Montagefläche für eines der Haubenelemente vorzugeben.

8. Gefäß nach Anspruch 1, dadurch gekennzeichnet, daß der Flansch ferner umfaßt:

A) erste mit dem Flansch (16) verbundene Verbindungsmittel (90) auf der Außenwand (72) des Außenbehälters (15), um eine Montagefläche für die untere Basis (22) vorzugeben; und

B) zweite mit dem Flansch (16) verbundene Verbindungsmittel (108) auf der Oberfläche des Flansches (16), um eine Montagefläche für eines der Haubenelemente vorzugeben.

9. Gefäß nach den Anspruch 7 und 8, dadurch gekennzeichnet, daß die ersten Verbindungsmittel (90) auf dem keramischen Material an einer Stelle nahe des Innenbehälters angeordnet sind.

10. Gefäß nach den Ansprüchen 7 und 8, dadurch gekennzeichnet, daß die ersten und zweiten Verbindungsmittel erste und zweite Metallisierungen (90, 92, 108) umfassen, wobei jede dieser Metallisierungen mit der Keramikmatrix integriert ist.

11. Gefäb nach den Ansprüchen 6 und 10, dadurch gekennzeichnet, daß die Metallisierungen mit der Keramikmatrix integriert werden durch ein Verfahren des gemeinsamen Einbrennens der Keramikmatrix und der Metallisierungen.

**Revendications**

1. Appareil à vase Dewar pour recevoir un ensemble détecteur de radiations (14) sous vide, ledit appareil fournissant un moyens de connexion électrique entre les éléments dudit ensemble détecteur et d'autres sous-ensembles de traitement des signaux extérieurs audit appareil, comprenant:

(A) une cuve intérieure (10) muni d'une surface d'extrémité (12) à une première extrémité de ladite première cuve intérieure,

(B) une cuve extérieure (15) munie d'un organe en forme de base inférieure (21, 22), un élément en forme de bride (16) et des éléments en forme de couvercle (18, 20), ledit élément en forme de base inférieure et lesdits éléments en forme de couvercle étant accouplés à ladite bride de façon que chacun desdits éléments forment une partie d'une paroi interne et d'une paroi externe de ladite cuve extérieure,

(C) des moyens (21, 106) pour le montage de ladite cuve intérieure (10) dans ladite cuve extérieure (15), lesdits moyens de montage étant disposés sensiblement à la base dudit élément en forme de base inférieure,

(D) des moyens en forme de conducteurs (62, 65, 66, 67) assurant une pluralité de connexions électriques à partir de l'intérieur de ladite cuve extérieure (10) vers l'extérieur de ladite cuve extérieure (15) tout en constituant un joint pour empêcher toute variation significative de la dépression qui peut être ménagée dans lesdites cuves intérieure et extérieure; et,

(E) des premiers moyens de connexion électrique (37, 80) pour relier ledit ensemble détecteur (14) auxdits moyens conducteurs (62, 66, 67), lesdits premiers moyens de connexion électrique étant situés dans l'espace entre ladite cuve intérieure (10) et ladite cuve extérieure (15), caractérisés en ce que lesdits moyens conducteurs font partie intégrante dudit organe en forme de bride (16) et comprennent:

(F) au moins deux couches isolantes (68, 70, 72) comprenant une couche extérieure et une couche intérieure,

(G) une pluralité de bornes extérieures (62) montées sur ladite couche extérieure (72) desdites couches isolantes,

(H) une pluralité de bornes intérieures (65) montées sur ladite couche intérieure (68) desdites couches isolantes,

(I) des seconds moyens de connexion électrique (66) accouplés entre chacune desdites bornes extérieures et desdites bornes intérieures, respectivement, suivant un trajet physique qui va desdites bornes intérieures, au travers de ladite couche intérieure, le long de la jonction de ladite couche intérieure et de ladite couche extérieure au travers de ladite couche extérieure, et ensuite vers lesdites bornes extérieures, et

(J) ladite pluralité de bornes intérieures comprenant des chemins conducteurs (65) appliqués sur ladite paroi intérieure de ladite couche intérieure (68), lesdits trajets étant connectés à une extrémité auxdits premiers moyens de connexion électrique (37) et, à l'autre extrémité, auxdits seconds moyens de connexion électrique (66).

2. Appareil selon la revendication 1, caractérisé en ce que lesdits moyens conducteurs (66, 67) forment un chemin électrique qui empêche la dégradation du vide dudit appareil.

3. Appareil selon la revendication 2, caractérisé en ce que ledit chemin électrique est réalisé physiquement avec au moins un changement de direction physique.

4. Appareil selon la revendication 1, caractérisé en ce que lesdits moyens conducteurs comprennent au moins trois couches isolantes (68, 70, 72) comprenant une couche intérieure (68), une couche extérieure (72) et une couche intermédiaire (70) entre les couches intérieure et extérieure.

5. Appareil selon la revendication 4, caractérisé en ce que ladite couche intérieure (68) constitue une partie de la paroi intérieure de ladite cuve extérieure (15) et dans lequel ladite couche extérieure (72) forme une partie de la paroi extérieure de ladite cuve extérieure (15).

6. Appareil selon la revendication 1, caractérisé en ce que ledit organe en forme de bride (16) comprend une matrice de céramique multicouches comprenant une partie dudit organe pour réaliser une pluralité de connexions électriques encastrées à l'intérieur.

7. Appareil selon la revendication 1, caractérisé en ce que ledit organe en forme de bride comprend en outre:

(A) des premiers moyens (90) de jonction par couplage audit organe en forme de bride (16), lesdits premiers moyens de connexion étant positionnés sur la paroi extérieure (72) de ladite cuve extérieure (15) afin de constituer une surface de montage pour ladite base inférieure (22).

(B) dans lequel l'extrémité dudit organe en forme de bride (16) la plus éloignée de ladite cuve intérieure (10) forme une surface cylindrique extérieure, et

(C) des seconds moyens (92) de jonction par couplage audit organe en forme de bride (16), lesdits seconds moyens de jonction étant positionnés sur ladite surface cylindrique extérieure dudit organe en forme de bride afin de réaliser une surface de montage pour l'un desdits organes en forme de couvercle.

8. Dispositif selon la revendication 1, caractérisé en ce que ledit organe en forme de bride comprend en outre:

(A) des premiers moyens (90) de jonction par couplage dudit organe en forme de bride (16), lesdits premiers moyens de jonction étant positionnés sur ladite paroi extérieure (72) de ladite cuve extérieure (15) pour réaliser une surface de montage pour ladite base inférieure (22), et

(B) des seconds moyens (108) de jonction par couplage dudit organe en forme de bride (16), lesdits seconds moyens de jonction étant positionnés sur le haut de l'organe en forme de bride (16) afin de réaliser une surface de montage pour l'un desdits organes en forme de couvercle.

9. Appareil selon les revendications 7 et 8, caractérisé en ce que lesdits premiers moyens (90) de jonction sont situés sur ledit matériau de céramique en une position voisine de ladite cuve intérieure.

10. Appareil selon les revendications 7 et 8, caractérisé en ce que lesdits premiers et seconds moyens de jonction comprennent une première et une seconde métallisation (90, 92, 108), respectivement, chacune desdites métallisations étant intégrée a ladite matrice de céramique.

11. Appareil selon les revendications 6 et 10, caractérisé en ce que lesdites métallisations sont intégrées à ladite matrice de céramique par un procédé de fabrication par co-cuisson de ladite matrice de céramique et desdites métallisations.

FIG. 1

FIG. 2

EP 0 154 947 B1

FIG. 3